# EUROPÄISCHE PATENTSCHRIFT

(11) **EP 2 169 370 B1**
(45) Veröffentlichungstag und Bekanntmachung des Hinweises auf die Patenterteilung: **05.03.2014**
(21) Anmeldenummer: 09011835.7
(22) Anmeldetag: 17.09.2009
(51) Int. Cl.: G01K 1/14, F24D 19/10, G01K 17/10, G01K 13/02

(54) **Wärmezähler**
Heat meter
Compteur thermique

(30) Priorität: 30.09.2008 DE 202008012954 U
(43) Veröffentlichungstag der Anmeldung: 31.03.2010
(73) Patentinhaber: Engelmann Sensor GmbH, 69168 Wiesloch-Baiertal (DE)
(72) Erfinder: Huss, Dominique, D-67551 Worms (DE); Sturek, Robert, D-69168 Wiesloch (DE); Hermann, Kevin, D-69214 Eppelheim (DE)
(74) Vertreter: Durm & Partner

(56) Entgegenhaltungen:
- DE-A1- 3 644 966
- DE-A1- 4 232 801

## Beschreibung

Die Erfindung betrifft einen Wärmezähler zur Bestimmung der Wärmemenge, die einem Verbraucher über einen Heizkreislauf zugeführt wird. Die verbrauchte Wärmemenge errechnet sich aus dem Volumenstrom des Heizwassers und der Temperaturdifferenz zwischen Vorlauf und Rücklauf des Heizwasserkreislaufs. Solche Geräte werden insbesondere für die Heizkostenabrechnung eingesetzt.

Ein Wärmezähler besteht im Wesentlichen aus einem Durchflusszähler, zwei Temperaturfühlern für Vor- und Rücklauf sowie einem Mikroprozessor-Rechenwerk mit einem Display, auf dem die verbrauchte Energie ablesbar ist. Es gibt Geräte mit Einstrahl- oder Mehrstrahl-Durchflusszähler. Die Geräte können als Kompaktwärmezähler ausgeführt sein, bei dem das Rechenwerk fest mit dem vom Heizwasser durchflossenen Gehäuse verbunden ist, oder als Split-Gerät mit einem separaten Rechenwerk, das durch elektrische Kabel mit dem Durchflusssensor und den Temperaturfühlern verbunden ist.

Beispiele hierfür sind in DE 42 32 801 A1 und DE 36 44 966 A1 zu finden.

Die Erfindung betrifft insbesondere einen Wärmezähler mit einem Gehäuse, das von erwärmtem Wasser durchflossen wird, und an dem seitlich eine Fühlertasche mit von außen zugänglicher Bohrung vorgesehen ist. Ein Temperaturfühler mit vorne durch eine Kappe abgeschlossener Fühlerhülse kann durch die Bohrung in die Fühlertasche eingesetzt werden, so dass die Spitze der Fühlerhülse in das Innere des Gehäuses hineinragt und dort in gutem Wärmekontakt mit dem Heizwasser kommt. Die in die Fühlertasche hineinführende Bohrung wird mittels einer einschraubbaren Befestigungshülse verschlossen, wobei das Fühlerkabel durch das Ende der Befestigungshülse nach außen geführt ist. Die Bohrung ist als Stufenbohrung ausgebildet mit abgestuftem Durchmesser, wodurch eine Anlagefläche für einen Dichtring gebildet wird. Dieser Dichtring dichtet die Fühlerhülse radial gegen die Wandung der Bohrung ab, so dass kein Wasser aus dem Gehäuse nach außen austreten kann.

Der Volumenstrom des erwärmten Wassers, der durch das Gehäuse fließt, wird durch einen an das Gehäuse angebauten Durchflusssensor gemessen. Üblicherweise kommen Flügelradzähler zum Einsatz.

Eine exakte Positionierung der Spitze des Temperaturfühlers im Innern des Gehäuses ist Voraussetzung für eine exakte Messung der Temperatur. Nach dem Einbau darf der Temperaturfühler weder unbeabsichtigt aus dem Gehäuse herausziehbar sein noch darf er versehentlich tiefer als vorgesehen in das Gehäuse hineingedrückt werden. Nach dem Einbau darf also die Fühlerspitze ihre Position in Längsrichtung nicht mehr ändern.

Um den Temperaturfühler gegen Herausziehen aus der Fühlertasche zu sichern, ist die Befestigungshülse an der Stelle, an der das Fühlerkabel austritt, mit einem verengten Bund versehen, an dem das hintere offene Ende der Fühlerhülse anstößt. Anstelle eines Bundes kann die Befestigungshülse auch mit einer abgestuften Durchgangsbohrung versehen sein, wobei die Stufe dann eine Anstoßfläche für die Fühlerhülse bildet.

Bei den bekannten Wärmezählern ist der Temperaturfühler auch gegen zu tiefes Hineinschieben in die Fühlertasche gesichert, und zwar üblicherweise durch einen quer zur Fühlerachse durch die Befestigungshülse eingeschobenen Sicherungsstift bzw. Splint, der in eine umlaufende Nut in der Fühlerhülse eingreift. Das Einbringen eines solchen Sicherungsstiftes nach erfolgter Montage des Temperaturfühlers ist aber ein umständlicher und zeitraubender Arbeitsschritt, der die Herstellung verteuert oder auch einmal gerne "vergessen" wird. Ein weiteres Problem besteht darin, überhaupt die korrekte Position des Temperaturfühlers zu finden, in der das Querloch in der Befestigungshülse mit der Nut in der Fühlerhülse fluchtet, so dass der Stift eingeschlagen werden kann. Im Falle einer Revision muss der Sicherungsstift erst mühsam wieder entfernt werden, bevor die Befestigungshülse abgeschraubt und der Temperaturfühler herausgezogen werden kann.

Aufgabe der Erfindung ist somit, einen verbesserten Wärmezähler vorzuschlagen, bei dem der Temperaturfühler schnell und einfach in das Gehäuse einsetzbar ist, dessen korrekte Lage gewährleistet ist und der Temperaturfühler nach der Montage sowohl gegen Herausziehen wie auch Hineinschieben gut gesichert ist.

Bei der Lösung dieses technischen Problems wird ausgegangen von einem Wärmezähler der eingangs beschriebenen Art. Gelöst wird die Aufgabe gemäß dem ersten Schutzanspruch durch eine auf die Fühlerkappe aufgeschobene Positionierhülse, die an dem Dichtring liegt und an ihrer Innenseite Rastelemente aufweist, die in die Positioniernut der Fühlerhülse eingreifen.

Die Positionierhülse wird vor der Montage auf die Fühlerkappe aufgeschoben. Anschließend wird der Temperaturfühler zusammen mit der noch losen Befestigungshülse in die Fühlertasche eingesetzt und zuletzt die Befestigungshülse eingeschraubt. Dabei legt sich die Positionierhülse an den Dichtring, der in die Bohrung eingelegt wurde, an. Die Positionierhülse verbindet sich mittels der Rastelemente formschlüssig mit der Fühlerkappe. Damit ist die Position des Temperaturfühlers in der Längsrichtung exakt festgelegt. Der sonst übliche Spannstift und dessen Montage entfallen. Auch eine möglicherweise erforderliche Demontage des Temperaturfühlers wird dadurch vereinfacht, denn die mit der Fühlerhülse nur verrastete Positionierhülse behindert das Abschrauben der Befestigungshülse und anschließende Herausziehen des Temperaturfühlers aus der Fühlertasche nicht.

Bevorzugt weist die Positionierhülse einen kreisringförmigen Flansch auf, der die Anlagefläche für den Dichtring bildet. Vorteilhaft kann die Positionierhülse zudem kreisabschnittsförmig ausgebildete Spreizstege aufweisen, an deren Innenseite wulstartig ausgebildete Rastleisten vorgesehen sind, wobei der Außendurchmesser der Positionierhülse im Bereich dieser Spreizstege zweckmäßig etwas geringer ist als der Innendurchmesser der Schraubhülse. Während der kreisringförmige Flansch eine ausreichend große ebene Anlagefläche für den Dichtring bietet, sorgen die Spreizstege dafür, dass die Positionierhülse ohne großen Widerstand auf die Fühlerhülse aufgeschoben werden kann. Sobald die Positionierhülse ihre vorgesehene Lage erreicht hat, rasten die wulstartigen Rastleisten in die umlaufende Nut der Fühlerhülse ein. Die zuvor nach außen abgespreizten Spreizstege liegen dann wieder parallel zur Oberseite der Fühlerhülse. Die Schraubhülse kann über die eingerastete Positionierhülse geschoben werden, bis sie an dem Flansch anstößt. Die Spreizstege lassen sich dann nicht mehr abspreizen, wodurch sichergestellt ist, dass bei eingeschraubter Befestigungshülse die Rastleisten nicht aus der Positioniernut herausrutschen können.

Die Fühlerhülse ist in der Regel aus Metallblech gefertigt. Es bietet sich an, die Positioniernut in der Fühlerhülse durch eine Rollierung des Metallblechs auszubilden. Es können auch mehrere solche Rollierungen im Abstand zueinander vorgesehen werden, um verschiedene definierte Einbaupositionen für den Temperaturfühler zu ermöglichen. Ein weiterer Vorteil ist die Kompatibilität mit handelsüblichen Temperaturfühlern, die mit einer oder zwei Rollierungen versehen sind. Solche Fühler können also wahlweise mit der erfindungsgemäßen Positionierhülse oder herkömmlich mit einem Spannstift gegen unbeabsichtigtes Hineinschieben gesichert werden. Natürlich ist es auch denkbar, die Fühlerhülse durch eine Positionierhülse und zusätzlich auch noch durch einen Spannstift, also doppelt zu sichern.

Bevorzugt ist die Positionierhülse komplett einstückig aus einem Kunststoff gefertigt, der ausreichend elastisch ist, damit die Spreizstege mit den Rastleisten beim Aufschieben der Positionierhülse auf die Fühlerhülse keinen zu hohen Widerstand bieten, andererseits aber eine zuverlässige Rastverbindung zwischen Positionierhülse und Fühlerhülse gewährleistet ist.

Ein Ausführungsbeispiel der Erfindung wird nachstehend anhand der beigefügten Abbildungen näher erläutert. Es zeigen:
- Figur 1: einen kompletten Wärmezähler, perspektivisch;
- Figur 2: das Gehäuse und den Temperaturfühler des Wärmezählers von Fig. 1, in einer Explosionsdarstellung;
- Figur 3: die Positionierhülse gemäß Fig. 2, in unterschiedlichen Ansichten und vergrößertem Maßstab;
- Figur 4: einen Horizontalschnitt durch das Gehäuse des Wärmezählers gemäß Fig. 1 mit eingebautem Temperaturfühler.

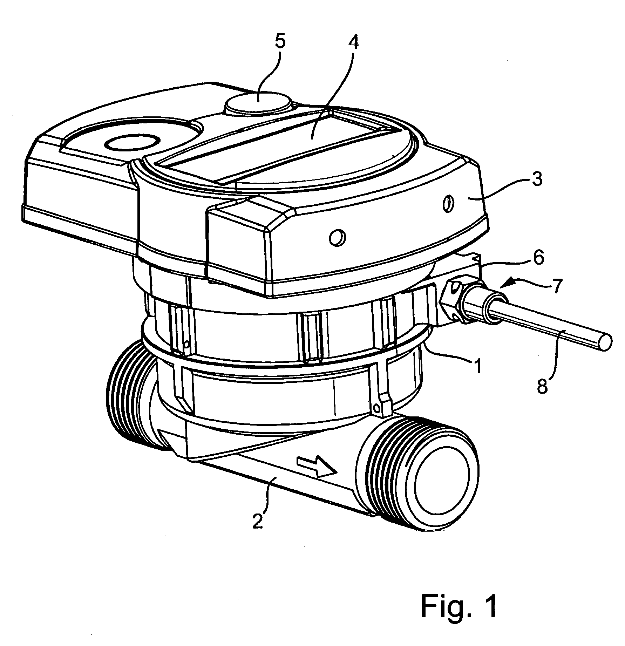

Der in Figur 1 zu sehende Wärmezähler hat ein flaches zylindrisches Gehäuse 1, das einstückig aus Messing gefertigt ist. Das Gehäuse ist auf ein T-Stück 2 aufgeschraubt, das zu einem Heizwasserkreislauf gehört. Der Pfeil gibt die Durchflussrichtung an. Im oberen Teil des Gehäuses 1 ist ein Flügelradzähler eingebaut, der den durch das T-Stück 2 hindurch fließenden Volumenstrom bestimmt. Auf die Oberseite des Gehäuses 1 ist ein Rechenwerk 3 aufgesetzt, das ein Display 4 zum Ablesen der verbrauchten Wärmemenge und Bedientasten 5 aufweist. Das Rechenwerk 3 ist abnehmbar, so dass es auch unabhängig vom Gehäuse 1 in einigem Abstand von der Messstelle montiert werden kann.

Seitlich am Gehäuse 1 ist eine Fühlertasche 6 ausgebildet, die einen elektronischen Temperaturfühler 7 aufnimmt. Dieser Temperaturfühler 7 ist mit dem Rechenwerk 3 über ein Fühlerkabel 8 verbunden. Ein zweiter Temperaturfühler, der hier nicht dargestellt ist, misst die Temperatur an einer anderen Stelle des Heizwasserkreislaufs. Aus der Temperaturdifferenz und dem Volumenstrom errechnet das Rechenwerk 3 die verbrauchte Wärmemenge.

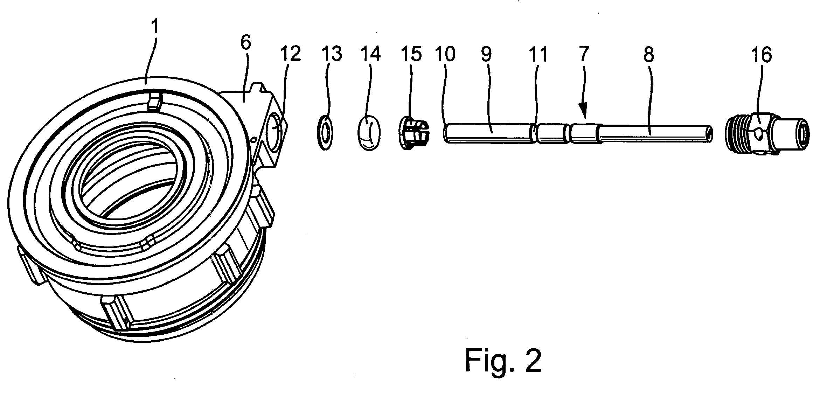

Anhand von Figur 2 lässt sich der Zusammenbau des Temperaturfühlers 7 mit dem Gehäuse 1 nachvollziehen.

Der Temperaturfühler 7 besteht im Kern aus einem Platin-Widerstand mit temperaturabhängigem elektrischem Widerstand. Dieser Platin-Widerstand ist in eine metallene Fühlerhülse 9 eingebaut. Vorne ist die Fühlerhülse 9 durch eine Kappe 10 dicht verschlossen. Das Fühlerkabel 8 ist aus dem offenen Ende der Fühlerhülse 9 herausgeführt. Die Fühlerhülse 9 weist zwei Rollierungen auf, von denen die vordere eine Positioniernut 11 bildet.

Die am Gehäuse 1 ausgebildete Fühlertasche 6 hat eine Bohrung 12, die von außen zugänglich ist. In diese Bohrung 12, die abgestuften Durchmesser hat, wird zuerst eine Stützscheibe 13 und dann ein Dichtring 14 mit O-förmigem Querschnitt eingeführt. Eine Positionierhülse 15 wird über die Kappe 10 auf die Fühlerhülse 9 aufgeschoben, bis sie in die Positioniernut 11 einrastet. Nach dem Einsetzen des Temperaturfühlers 7 in die Bohrung 12 wird eine Befestigungshülse 16 aufgeschraubt, durch deren offenes Ende das Fühlerkabel 8 herausgeführt ist.

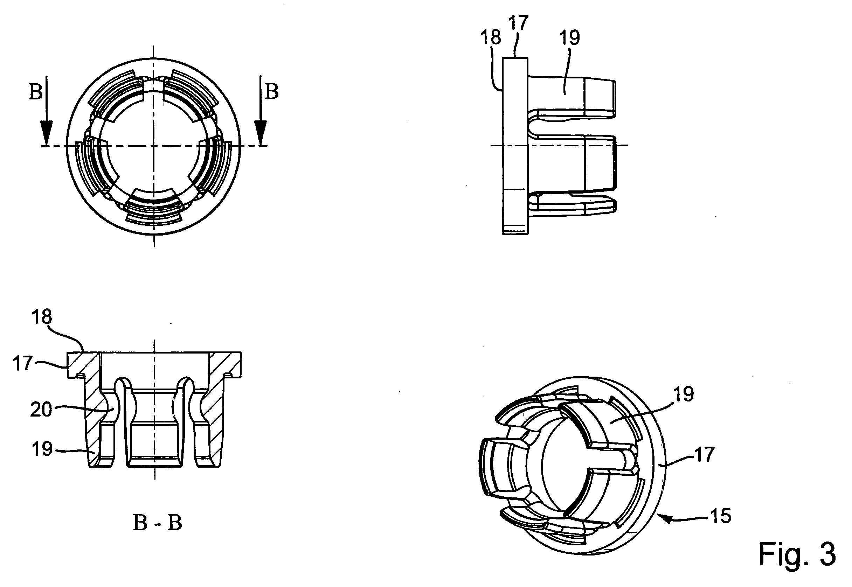

Figur 3 zeigt die Positionierhülse 15 im Detail.

Die Positionierhülse 15 umfasst einen kreisringförmigen Flansch 17, der eine Anlagefläche 18 für den Dichtring 14 (vergleiche Fig. 2) bildet. An den Flansch 17 schließt sich ein im Wesentlichen zylinderförmiger Abschnitt an, der aus im Querschnitt kreisabschnittsförmig ausgebildeten Spreizstegen 19 besteht. An den Innenseiten der Spreizstege 19 sind wulstartig ausgebildete Rastleisten 20 vorgesehen, die sich nach innen wölben. Die Querschnittsform der Rastleisten 20 korrespondiert mit dem Querschnitt der Positioniernut 11 in der Fühlerhülse 9 (vergleiche Fig. 2). Im Bereich des Flansches 17 ist der Innendurchmesser etwas größer als der Außendurchmesser der Fühlerhülse 9, wohingegen der Innendurchmesser im Bereich der Rastleisten 20 etwas kleiner ist.

Die Positionierhülse 15 ist einstückig aus einem hinreichend elastischen Kunststoff gefertigt, so dass die Spreizstege 19 sich beim Aufschieben auf die Fühlerhülse 9 federnd nach außen biegen lassen, bevor die Rastleisten 20 in die Positioniernut 11 einrasten und die Spreizstege zurückfedern.

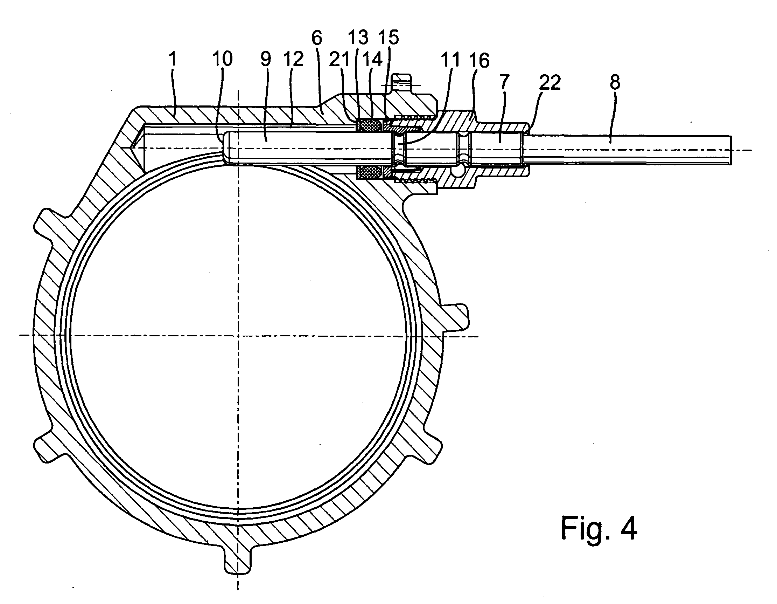

In Figur 4 sitzt der Temperaturfühler 7 in der Fühlertasche 6 und ist die Befestigungshülse 16 in die Bohrung 12 eingeschraubt. Die Kappe 10 der Fühlerhülse 9 ragt in das Innere des Gehäuses 1 und hat dort Kontakt mit dem Heizwasser, dessen Temperatur gemessen werden soll. Da die Bohrung 12 abgestuften Durchmesser hat, bildet sie eine ringförmige Anlagefläche 21 für die Stützscheibe 13. Der Dichtring 14 dichtet die Fühlerhülse 9 radial nach außen gegen die Wandung der Bohrung 12 ab. Die Positionierhülse 15 ist soweit auf die Fühlerhülse 9 aufgeschoben, dass die Rastleisten 20 der Spreizstege 19 (vergleiche Fig. 3) in die Positioniernut 11 der Fühlerhülse 9 formschlüssig eingreifen. Der Flansch 17 (vergleiche Fig. 3) liegt am Dichtring 14 an. Somit ist die Position der Fühlerhülse 9 in Längsrichtung so weit gesichert, dass ein weiteres Hineinschieben (in der Zeichnung nach links) nicht möglich ist.

Die Befestigungshülse 16 ist vollständig in die Bohrung 12 eingeschraubt. Die vordere (linke) Stirnseite der Befestigungshülse 16 stößt an dem Flansch 17 der Positionierhülse 15 an. Das rückwärtige offene Ende der Fühlerhülse 9 liegt an einem verengten Bund 22 der Befestigungshülse 16 an. Damit ist die Fühlerhülse 19 auch gegen Herausziehen (in der Zeichnung nach rechts) gesichert.

Bezugszeichen
- 1: Gehäuse
- 2: T-Stück
- 3: Rechenwerk
- 4: Display
- 5: Bedientaste
- 6: Fühlertasche
- 7: Temperaturfühler
- 8: Fühlerkabel
- 9: Fühlerhülse
- 10: Kappe (von 9)
- 11: Positioniernut
- 12: Bohrung (in 6)
- 13: Stützscheibe
- 14: Dichtring
- 15: Positionierhülse
- 16: Befestigungshülse
- 17: Flansch (von 15)
- 18: Anlagefläche (von 17)
- 19: Spreizsteg (von 15)
- 20: Rastleiste (an 19)
- 21: Anlagefläche
- 22: Bund (von 16)

## Patentansprüche

1. Wärmemengenzähler, mit
einem Gehäuse (1), das von erwärmtem Wasser durchflossen wird,
einer seitlich am Gehäuse (1) ausgebildeten Fühlertasche (6) mit von außen zugänglicher Bohrung (12), die eine ringförmige Anlagefläche (18) bildet,
einem Temperaturfühler (7) mit vorne durch eine Kappe (10) abgeschlossenen Fühlerhülse (9), die durch die Bohrung (12) in das Gehäuse (1) hineinragt, und (mit einem) aus der Fühlerhülse (9) herausgeführten Fühlerkabel (8),
**dadurch gekennzeichnet dass** die Bohrung einen abgestuften Durchmesser hat und der Wärmemengenzähler
eine an der Fühlerhülse (9) vorgesehene Positioniernut (11),
eine in die Bohrung (12) eingeschraubte Befestigungshülse (16), durch die das Fühlerkabel (8) hindurchgeführt ist,
einen Dichtring (14), der an der Anlagefläche (18) anliegt und die Fühlerhülse (9) gegen die Wandung der Bohrung (12) abdichtet und,
eine auf die Fühlerkappe (10) aufgeschobene Positionierhülse (15), die an den Dichtring (14) anstößt und an ihrer Innenseite Rastelemente (20) aufweist, die in die Positioniernut (11) der Fühlerhülse (9) eingreifen,
aufweist.

2. Wärmezähler nach Anspruch 1, **dadurch gekennzeichnet, dass** die Positionierhülse (15) einen kreisringförmigen Flansch (17) aufweist, der eine Anlagefläche (18) für den Dichtring (14) bildet.

3. Wärmezähler nach Anspruch 1 oder 2, **dadurch gekennzeichnet, dass** die Positionierhülse (15) im Querschnitt kreisabschnittsförmig ausgebildete Spreizstege (19) aufweist, an deren Innenseite wulstartig ausgebildete Rastleisten (20) vorgesehen sind.

4. Wärmezähler nach Anspruch 3, **dadurch gekennzeichnet, dass** der Außendurchmesser der Positionierhülse (15) im Bereich der Spreizstege (19) etwas geringer ist als der Innendurchmesser der Befestigungshülse (16).

5. Wärmezähler nach Anspruch 4, **dadurch gekennzeichnet, dass** die Befestigungshülse (16) die Positionierhülse (15) im Bereich der Spreizstege (19) umfasst.

6. Wärmezähler nach einem der Ansprüche 1 bis 5, **dadurch gekennzeichnet, dass** die Fühlerhülse (9) aus Metallblech gefertigt ist und die Positioniernut (11) in der Fühlerhülse (9) durch eine Rollierung gebildet ist.

7. Wärmezähler nach einem der Ansprüche 1 bis 6, **dadurch gekennzeichnet, dass** die Positionierhülse (15) einstückig aus einem hinreichend elastischen Kunststoff gefertigt ist.

## Claims

1. A heat meter including
a housing (1), through which heated water flows,
a sensor pocket formed laterally on the housing (1) with an externally accessible bore (12), which defines an annular engagement surface (18),
a temperature sensor (7) with a sensor sleeve (9), which is closed at the front by a cap (10) and which projects through the bore (12) into the housing (1), and (including) a sensor cable (8) extending out of the sensor sleeve (9),
**characterised in that** the bore has a stepped diameter and the heat sensor includes
a positioning groove (11) provided on the sensor sleeve (9),
a fastening sleeve (16), which is screwed into the bore (12) and through which the sensor cable (8) extends,
a scaling ring (14), which engages the engagement surface (18) and seals the sensor sleeve (9) with respect to the wall of the bore (12) and
a positioning sleeve (15), which is pushed onto the sensor cap (10) and abuts the sealing ring (14) and has locking elements (20) on its inner side, which engage in the positioning groove (11) in the sensor sleeve (9).

2. A heat meter as claimed in Claim 1, **characterised in that** the positioning sleeve (15) has a circular ring-shaped flange (17), which defines an engagement surface (18) for the sealing ring (14),

3. A heat meter as claimed in Claim 1 or 2, **characterised in that** the positioning sleeve (15) has expandable arms (18), which are of circular segmental shape in cross-section and provided on whose inner surface are bead-like locking bars (20).

4. A heat meter as claimed in Claim 3, **characterised in that** the outer diameter of the positioning sleeve (15) in the vicinity of the expandable arms (19) is somewhat less than the inner diameter of the fastening sleeve (16).

5. A heat meter as claimed in Claim 4, **characterised in that** the fastening sleeve (16) surrounds the positioning sleeve (15) in the region of the expandable arms (19).

6. A heat meter as claimed in one of Claims 1 to 5, **characterised in that** the sensor sleeve (19) is made of metal plate and the positioning groove (11) is formed in the sensor sleeve (9) by a rolling process.

7. A heat meter as claimed in one of Claims 1 to 6, **characterised in that** the positioning sleeve (15) is made in one piece from a sufficiently elastic plastic material.

## Revendications

1. Compteur thermique comprenant
un boîtier (1), à travers lequel s'écoule de l'eau chauffée,
un puits thermométrique (6) ménagé sur le côté du boîtier comprenant un alésage (12) accessible par l'extérieur, qui forme une surface d'appui annulaire (18),
un capteur de température (7) comprenant un manchon de capteur (9) fermé à l'avant par un capuchon (10), lequel manchon pénètre dans le boîtier (1) à travers l'alésage (12), et (comprenant) un câble de capteur (8) ressortant du manchon de capteur (9),
**caractérisé en ce que** l'alésage a un diamètre à échelons et le compteur thermique présente
une rainure de positionnement (11) prévue au niveau du manchon de capteur (9),
un manchon de fixation (16) vissé dans l'alésage (12), manchon à travers lequel le câble de capteur (8) est introduit,
une bague d'étanchéité (14) qui repose contre la surface d'appui (18) et rend étanche le manchon de capteur (9) contre la paroi de l'alésage (12), et
un manchon de positionnement (15) poussé sur le capuchon de capteur (10), lequel manchon bute contre la bague d'étanchéité (14) et présente des éléments d'encliquetage (20) sur son côté intérieur, lesquels s'enclenchent dans la rainure de positionnement (11) du manchon de capteur (9).

2. Compteur thermique selon la revendication 1, **caractérisé en ce que** le manchon de positionnement (15) présente une bride de forme circulaire (17) qui forme une surface d'appui (18) pour la bague d'étanchéité (14).

3. Compteur thermique selon la revendication 1 ou 2, **caractérisé en ce que** le manchon de positionnement (15) présente des pattes d'écartement (19) réalisées en forme de sections circulaires en coupe transversale, au niveau du côté intérieur desquelles sont prévues des zones d'encliquetage (20) réalisées sous forme de renflements.

4. Compteur thermique selon la revendication 3, **caractérisé en ce que** le diamètre extérieur du manchon de positionnement (15) dans la zone des pattes d'écartement (19) est légèrement inférieur au diamètre intérieur du manchon de fixation (16),

5. Compteur thermique selon la revendication 4, **caractérisé en ce que** le manchon de fixation (16) comprend le manchon de positionnement (15) dans la zone des pattes d'écartement (19).

6. Compteur thermique selon l'une des revendications 1 à 5, **caractérisé en ce que** le manchon de capteur (9) est réalisé en tôle métallique et la rainure de positionnement (11) est formée dans le manchon de capteur (9) par un rebord roulé.

7. Compteur thermique selon l'une des revendications 1 à 6, **caractérisé en ce que** le manchon de positionnement (15) est réalisé d'un seul tenant à partir d'une matière plastique suffisamment élastique.
